# EUROPEAN PATENT APPLICATION

(11) **EP 3 702 150 A1**
(43) Date of publication of application: **02.09.2020**
(21) Application number: 19159529.7
(22) Date of filing: 26.02.2019
(51) Int. Cl.: B32B 17/10

(54) **LAMINATED GLASS COMPRISING INTERLAYER FILM LAYERS WITH A COLOURED REGION**

(71) Applicant: Kuraray Europe GmbH, 65795 Hattersheim (DE)
(72) Inventor: The designation of the inventor has not yet been filed
(74) Representative: Janßen, Christian Oliver

(57) **Abstract**

The invention is directed to laminated glass obtained by laminating at least one film A containing a polyvinyl acetal PA and optionally at least one plasticiser WA and at least one film B containing a polyvinyl acetal PB and at least one plasticiser WB between two glass sheets, **characterised in that** prior to lamination
- the amount of plasticiser WA in film A is less than 22 % by weight
- the amount of plasticiser WB in film B is at least 22 % by weight and
- film A comprises at least on one surface a coloured region.

## Description

The present invention relates to laminated glass, especially glazing for building facades, comprising two glass sheets combined by an adhesive interlayer film which is provided coloured in at least one region.

Laminated safety glasses are generally composed of two glass sheets and an intermediate film, which joins the panes of glass. As a film material mainly plasticized polyvinyl butyral is used (PVB), obtainable from the reaction of polyvinyl alcohol with n-butyraldehyde.

Apart from the usual advantageous features of laminated glazing like penetration resistance and retention of flinders after breakage, glazing in different colours is experiencing an increasing demand, especially for decorative purposes and shading against excessive sunlight in the building industry. Currently, pigments are blended into the PVB and then co-extruded to yield coloured PVB films. This technique has certain disadvantages. For example, the PVB film producers need to separately blend the PVB with each individual colour and extrude the individual coloured films and afterwards, the complete production line needs to be cleaned to remove traces of the pigments, which otherwise would lead to an unacceptable quality of the clear PVB films usually produced. Due to the large possible number of different colours and an increasing demand for specific colours, e.g. colours of a specific corporate design, film producers have to produce a large number of different colours and store them - most of them in cold storage conditions - until sale. Since film producers usually produce and sell various different types of films, every single one of these types of films would need to be individually produced in every specific colour. As a solution to this problem it is known to stack several sheets of PVB films extruded with different basic colours to create a laminate with a certain colour. However, applying several layers of basic colours can lead to an unacceptable thickness of the glass laminate. Moreover, the stacking of different coloured PVB layers can lead to undesired optical distortion effects and to problems in the de-aeration process prior to the lamination step.

One additional disadvantage is that this technique of blending and co-extruding does not allow for the application of design elements inside the laminated glass but only for single colour applications.

In light of these disadvantages, there is still a demand for improved laminated glass with a coloured region.

Thus, object of the present invention was an improved laminated glass using a more economic, e.g. in terms of time and/or cost, and more flexible process and/or a laminated glass with improved properties.

These and other problems have been solved by the present invention.

One aspect of the present invention is a laminated glass obtained by laminating at least one film A containing a polyvinyl acetal PA and optionally at least one plasticiser WA and at least one film B containing a polyvinyl acetal PB and at least one plasticiser WB between two glass sheets, characterised in that prior to lamination, the amount of plasticiser WA in film A is less than 22 % by weight based on the total weight of film A, the amount of plasticiser WB in film B is at least 22 % by weight based on the total weight of film B and film A comprises a coloured region on at least one surface.

Preferably, the amount of plasticiser WB in film B is equal to or higher than 15 %, more preferably 20 %, and most preferably 25 % by weight based on the total weight of film B. It is preferably equal to or less than 45 %, more preferably 40 % and most preferably 45 % by weight based on the total weight of film B.

### Brief description of the drawings

Fig 1 illustrates one embodiment of a laminated glass structure of the invention
Fig 2 illustrates a further embodiment of a laminated glass structure of the invention

Hereinafter, the term "prior to lamination" refers to the state of the films A and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

The term "coloured region" refers to a region where the surface of film A has been modified in a way that the surface appears in a colour other than black and the colour of standard commercial-grade PVB, which has not been modified with the purpose to display a specific colour. The coloured region can display any possible colour of the visible light spectrum as a single colour or as a mixture of different colours in different sub-regions of the coloured region. In this respect, "coloured region" shall also refer to a region with a metallic effect, a white region or to a region in any possible shade of grey.

The present invention is especially advantageous for laminates comprising thin glass sheets since it reduces the overall weight of the laminated glass, which is advantageous for construction and transportation. In a preferred embodiment of the invention, at least one of the glass sheets has a thickness of less than 1.8 mm, such as less than 1.6; less than 1.4; less than 1.0; or less than 0.9 mm.

### Film A

Laminates according to the invention may comprise one or more films A, but at least one film A is oriented adjacent to a glass surface of the laminated glass according to the invention. It is also possible to apply a film A to both glass surfaces, such that a laminated glass laminate with a layer sequence glass/film A/film B/film A/glass is provided.

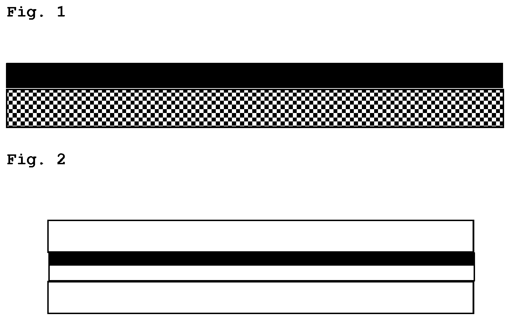

As shown in Fig. 1, the coloured region covers preferably the complete surface of film A (1). (see Fig. 1).

Alternatively, the coloured region covers only parts of the at least one surface of film A. In this way, patterns can be introduced in the laminated glass, e.g. for decoration or as deterrence for birds. Preferably, the coloured region covers equal to or more than 50 %, more preferably 70 %, most preferably more than 80 % and specifically 90 % of the at least one surface of film A.

The coloured region can be located anywhere on the at least one surface of film A. Preferably it is located in a distance of equal to or more than 10 cm, more preferably 25 cm and most preferably 50 cm

The coloured region in the laminated glass is preferably non-transparent. Alternatively, it is preferably transparent. The term "non-transparent" refers to any region of the film having a light transmission in the visible spectrum of equal to or less than 5 %. In a variant, the "non-transparent region" may fade out towards transparency. In such variants, at least a part of the "non-transparent region" of the film has a light transmission in the visible spectrum of less than 5 %. The term "transparent" refers to any region of the film having a light transmission in the visible spectrum of more than 5 %.

Film A used in accordance with the invention preferably have a one-sided surface structure with a roughness Rz from 2 to 20 µm, preferably Rz from 1 to 15 µm, particularly preferably Rz from 3 to 12 µm and in particular Rz from 4 to 10 µm. It is particularly preferable if the side of film A coming into contact with the glass sheet has a surface roughness Rz of no more than 20 % of its thickness.

The coloured region on the surface of film A is preferably applied by printing, preferably on the side of film A which does not have the above mentioned surface structure, called hereafter the "flat side". This allows for good printing quality because a rougher surface would lead to a decrease in printing quality. Thus, the flat side preferably has a roughness Rz of equal to or less than 5, preferably equal to or less than 2.5 µm, and most preferably equal to or less than 1 µm.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB films A and B.

Also preferably, the coloured region can be applied by means of a coating process. The coating process can be applied using the usual methods known to a person skilled in the art, like raking, printing, casting, solvent coating (including gravure coating, slot die coating, spray coating), extrusion or calandering. It is preferred to apply the coating in a roll-to-roll process.

Pigments, which can be used in the invention, are commercially available. Preferable pigments include, but are not limited to, organic colour pigments or dyes like diazo dyes, phthalocyanines, perylenes, anthraquinones, anthrapyrimidines, quinophthalone, perinones, or monoazo dyes, for example Thermoplastrot 454, Macrolexgelb G, Sandoplast Rot G or Solvaperm Rot G, and/or inorganic pigments (for example zinc chromate, cadmiumsulphide, chromium oxide, ultramarine pigments and metal flakes, and also BaSO₄ and TiO₂. The pigments may be dispersed in a carrier fluid like water, alcohol or mixtures of alcohol and water. Furthermore, binders like polyacrylates, polyvinylalcohol, polyvinylbutyral, Polyvinylpyrrolidone, polyurethanes or poly styrene-acrylate may be added. Such printing compositions are referred to as "printing inks" or simple "inks" hereinafter.

In order to avoid wrinkling and or deformation of film A due to excessive heating in a drying step, it is crucial, that film A will not be exposed to temperatures above its glass transition temperature as measurable as Tg by DSC method. It is thus preferred, that the temperature of film A during the drying step is kept below Tg of the film by at least 3 °C or at least 5 °C or at least 10 °C or at least 15 °C or most preferred or at least by 20 °C.

The dry-film thickness of the coloured region is 0.25-50 µm depending on printing technique and required opacity. Usually the dry-film thickness is 1.0-10.0 µm.

Preferably, the printed-on coloured region on film A will be oriented facing film B rather than the glass surface to avoid differences of adhesion between the transparent centre and the printed-on portion of film A on the glass surface due to components which have been applied to the coloured region.

In the method according to the invention, the film A in the starting state prior to lamination has a thickness of not more than 30 %, preferably 15 %, and most preferably no more than 10 % of the thickness of the film or combined films B.

The thickness of a film A in the starting state prior to lamination is 10 - 250 µm, preferably 15 - 150 µm, preferably 20 - 100 µm, preferably 25 - 75 µm and most preferably 30 - 55 µm. This range of thickness does not include additional coating on the films. In the laminated glass, the thickness of the film can increase by transfer of plasticiser from film B.

Film A is produced separately from film B (for example extruded or solvent cast) and has either no plasticiser at all or a sufficiently small proportion of plasticiser so that subsequent functionalization and processing, especially a possible printing step, is not adversely influenced.

Since film A will preferably be in direct contact with one of the inner surface of the laminated glass, it is desirable to control its adhesion to an intermediate level in order to be better process-able in the lamination step. To this end, film A may contain alkali metal ions and/or earth alkali metal ions to adjust their adhesion level to glass (so called adhesion-control agents).

As alkali metal ions, potassium or sodium or lithium are preferred. Preferred ranges of concentration of the alkali metal ions are 7 - 210, preferably 14 - 140 and more preferably 21 - 140 ppm in the case of lithium, 23 - 690, preferably 46 - 460 and more preferably 69 - 460 ppm in the case of sodium and 39 - 1170, preferably 78 - 780 ppm and more preferably 117 - 780 in the case of potassium. It is furthermore preferred to add the alkali metal ions in form of salts of carboxylic acids having 1 to 10 carbon atoms. Especially preferred is potassium acetate as adhesion control agent.

The total amount of alkali metal salts may be as low as 0.005 % by weight based on the weight of film A. Preferred ranges of alkali metal salt are 0.01 % - 0.1 %; 0.02 - 0.08 %; 0.03 - 0.06 %, each weight % based on the weight of film A.

Film A used in the laminates of the invention may additionally comprise alkaline earth ions, but since their effect on adhesion is limited, only small amounts as compared to the alkali ion should be used. In a first embodiment of the invention film A comprises 0 to 20 ppm alkaline earth ions, preferable 0 to 5 ppm.

However, it is known that alkaline earth ions have a balancing effect of adhesion when a plasticized PVB film faces two glass sheets with different surface chemistry. Accordingly, in a second embodiment of the invention, film A comprises 5 - 20 ppm alkaline earth ions. The alkaline earth ions can be added in form salts of carboxylic acids having 1 to 10 carbon atoms. Especially preferred is magnesium acetate and/or magnesium neodecanoate as secondary adhesion control agent. In this embodiment, the ratio of alkali ions to alkaline earth ions in ppm in film A is preferable at least than 1, especially higher than 5 and more preferred higher than 10.

As alternative to the amount of alkali and earth alkali ions, the alkaline titer of film A and B may be used to characterize the amount of anti-adhesion agents (i.e. alkali and earth alkali salts) in the films. The alkaline titer of film A may be higher than 10, higher than 20, higher than 40, higher than 50, higher than 80, higher than 90 and preferred higher than 100, in each case with a maximum value of 500. In contrast to film A, the alkaline titer of film B is preferred to be lower, and more particularly the difference between alkaline titer (film A) - alkaline titer (film B) is more than 2, 6 and preferably more than 10 AT units.

In order to avoid haze, the amount of chloride ions and/or nitrate ions and/or sulphate ions in film A may be reduced.

The chloride content of the film A can thus be less than 150 ppm, preferably less than 100 ppm, and in particular less than 50 ppm. In the ideal case, the chloride content of the film A is less than 10 ppm or even 0 ppm.

The nitrate content of film A optionally may be less than 150 ppm, preferably less than 100 ppm, and in particular less than 50 ppm. In the ideal case, the nitrate content of film A is less than 10 ppm or even 0 ppm.

Again optionally, the sulphate content of film A may be less than 150 ppm, preferably less than 100 ppm, and in particular less than 50 ppm. In the ideal case, the sulphate content of the film A is less than 10 ppm or even 0 ppm.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Films A used in accordance with the invention may contain, in the starting state prior to lamination, less than 22 % by weight (such as 21.9 % by weight), less than 18 % by weight less than 16 % by weight, less than 12 % by weight, less than 8 % by weight, less than 4 % by weight, less than 2 % by weight, less than 1 % by weight or even no plasticiser (0.0 % by weight) . In a preferred embodiment of the invention, films A with a low plasticiser content preferably contain 0.0 - 8 % by weight of plasticiser, most preferred 0 - 4 weight %.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 30% by weight, 8 - 24 % by weight, 10 - 22 % by weight, 12 - 21 % by weight, 14 - 20 % by weight, 16 - 19 % by weight and preferably between 25 and 28 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 30 % by weight and the film B comprises a polyvinyl acetal B with a proportion of vinyl alcohol groups from 14 to 26 % by weight.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B'', which have a different plasticiser content.

In addition, films A and B may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In particular, film B may comprise 0.001 to 0.1 % by weight of alkaline metal salts and/or alkaline earth salts of carboxylic acids as adhesion control agent. It is preferred that film B contains magnesium ions in an amount of at least 10 ppm, preferably 20 ppm and most preferably 30 ppm.

### Lamination Process

The present invention also relates to a method for producing the described penetration resistant glass laminates, in which the film A is positioned on a glass sheet, then covered by at least one film B, and a second glass sheet is then applied.

Alternatively, it is possible for film B to be positioned on a glass sheet, then to be covered by at least one film A, and for a second glass sheet to be applied.

The present invention relates furthermore to a method for producing a laminated glass wherein a stack comprising at least one film A and at least one film B is provided, the stack is positioned on a first glass sheet and a second glass sheet is then applied.

It is possible in accordance with the invention to first melt the film A onto a glass sheet over the entire area or locally by increased temperature and to then cover this with the film B. Alternatively, films A and B can be positioned jointly between two glass sheets and melted at increased temperature.

The lamination step for producing a laminated glass is preferably carried out such that films A and B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, film A or B is positioned on a glass sheet, and the further film B or A is positioned synchronously or subsequently. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

The glass film laminate may then be subjected to an autoclave process. Film B is preferably positioned on the first glass sheet and covered by film A before the second glass sheet is applied. The method can be carried out in many conceivable and, in principle, practicable variants.

The films A are generally produced by extrusion with use of a cast-film line or in the form of a blown film. Here, a surface roughness may also be produced by controlled melt fracture or with the cast-film method additionally by use of a structured chill roll and/or structure back roll. Alternatively, solvent-cast method can be used for producing film A prior to functionalization and use in the described penetration resistant glass laminates.

If the surface of film A is provided with a heat-shielding coating, a particularly low surface roughness prior to application of the coating is preferred. In particular, the roughness parameter Ra here is less than 3 µm and Rz is less than 5 µm.

It has also been found that the coloured region on the at least one surface of film A can lead to a negative impact on the adhesion of film A to the glass. Thus, it is especially preferred to arrange the layers of the laminated glass in a way that the coloured region on film A is not directly in contact with the glass surface. Accordingly, another aspect of the present invention is a laminated glass obtained by laminating at least one film A containing a polyvinyl acetal PA and optionally at least one plasticiser WA and at least one film B containing a polyvinyl acetal PB and at least one plasticiser WB between two glass sheets, characterised in that the laminated glass comprises a coloured region sandwiched between film A and film B wherein film A and film B independently have a thickness of equal to or more than 30 µm and equal to or less than 500 µm, preferably equal to or more than 50 µm and equal to or less than 250 µm.

### Examples

A film composed of PVB resin powder (commercial grade Mowital B60H of Kuraray Europe GmbH) and 0.073 % (wt) of triethylenglycol-bis-3-(3-tert-butyl-4-hydroxy-5-methylphenyl)propionate (CAS: 36443-68-2, commercially available e.g. from Songwon as "Songnox 2450" from CIBA as "Irganox 245") is extruded through a wide-slit die into a plasticizer-free film.

Water-based coloured inks in different colours are applied on one face of the films and dried so that homogeneous areas of at least 100 cm² having the same single colour are obtained.

Prior to analytical determination of moisture content (Karl-Fischer Method) and metal content (ion chromatography) the printed film (example of film A) is stored in a conditioned area having a constant climate of 23 °C / 28 % RH.

Commercial PVB film (TROSIFOL® ULTRA CLEAR B100 NR 0.76 from Kuraray Europe GmbH = example of film B) is conditioned at the same climate prior to producing the test laminates.

Test laminates are obtained by combining thin clear glass (2 x Planiclear® 2.1 mm) cleaned with deionized water (< 5 µS) on a flat glass-washing machine) with the film A and B in the following lay-up order: bottom glass (tin side) |film B| film A| (air side) top glass. The size of these laminates is 30 cm by 30 cm or bigger as required by the tests described below.

The sandwiches are passed through a commercial flat glass laminating nip-roller line to produce pre-laminates. Lamination is then accomplished by using an autoclave with industry-standard conditions (90 min. total; comprising 30 min. hold time at 140 °C and 12 bar).

Prior to further evaluation, laminates are allowed to sit for 1 week at 23 °C in ambient conditions.

The thus prepared laminates safely pass the pendulum impact test 2(B)2 (450 mm) according to EN 12600, evidencing the applicability as laminated safety glass in the building industry. In addition, the laminates also pass the required tests for laminated safety glass as defined in DIN 52338.

When different positions of the homogeneously coloured areas are measured by means of a colour measurement spectrophotometer (ColorQuest® XE by HunterLab), the obtained colour values do not differ by more than ΔE = 1.

### Example 1

The production of film A is achieved by feeding to the inlet funnel of a lab-extruder of the co-rotating twin screw type the PVB and antioxidant. The melt is extruded into films in a width of 30 cm with a thickness of about 100 µm.

The printing is achieved by digital ink-jet printing with commercially available ink-jet inks e.g. SentryGlas® Expressions™ (alcohol based). For colour with high intensity, the same is overprinted three times with the same colour and subsequent drying of the film at 22 °C before applying the next layer of printing ink in order to reduce the solvent load per pass.

### Example 2

The production of film A is achieved by first preparing pellets with the target composition using a co-rotating twin-screw extruder. In addition to the components mentioned above (PVB and antioxidant), 0.525 % (wt) of an aqueous solution of potassium acetate and magnesium acetate tetrahydrate is simultaneously dosed into the extruder inlet zone calculated to give rise to 350 ppm potassium acetate respectively 175 magnesium acetate tetrahydrate in the produced pellets. Those pellets are then fed into a single-screw extruder and extruded into films of 155 cm width having a thickness of 50 µm.

Printing is then achieved by using a commercial flexographic printing machine and water-based CMYK printing inks that are suitable for flexographic printing, based on polyurethane as the binder. Such printing inks are commercially available e.g. from Siegwerk Druckfarben AG&Co. KGaA, Siegburg. For example, the colour green is achieved by overprinting cyan onto yellow. After drying in the printing machine, the water content of film A in the printed region is measured via Karl-Fischer titration to be between 1 % and 1.5 %.

### Example 3

The production of film A is achieved by first preparing pellets with the target composition using a co-rotating twin-screw extruder. Those pellets are then fed into a single-screw extruder and extruded into films of 155 cm width having a thickness of 40 µm.

Water-based CYMK printing inks (as used in example 2) are then coated onto sheets cut from film A (30 cm x 30 cm) using a wire-bar applicator in up to four coating-drying cycles. For the production of larger laminates, several of those sheets are laid directly next to each other.

### Example 4

The production of film A is achieved by first preparing pellets with the target composition using a co-rotating twin-screw extruder. Those pellets are then fed into a single-screw extruder and extruded into films of 155 cm width having a thickness of 50 µm.

The coloured region is then applied via a rotogravure printing machine using water-based rotogravure printing inks and subsequent drying. For example, the colour red is achieved by overprinting yellow and magenta. After drying in the printing machine, the water content of film A in the printed region is measured via Karl-Fischer titration to be between below 2 %.

## Claims

1. A laminated glass obtained by laminating at least one film A containing a polyvinyl acetal PA and optionally at least one plasticiser WA and at least one film B containing a polyvinyl acetal PB and at least one plasticiser WB between two glass sheets, **characterised in that** prior to lamination
- the amount of plasticiser WA in film A is less than 22 % by weight based on the total weight of film A
- the amount of plasticiser WB in film B is at least 22 % by weight based on the total weight of film B and
- film A comprises a coloured region on at least one surface.

2. The laminated glass according to claim 1, **characterised in that** the coloured region is printed or coated onto the at least one surface.

3. The laminated glass according to claim 1 or 2, **characterised in that** the coloured region is covering the complete at least one surface of film A.

4. The laminated glass according to claim 1 or 2, **characterised in that** the coloured region is partially covering the at least one surface of film A.

5. The laminated glass according to any of the claims 1 to 4, **characterised in that** the coloured region in the laminated glass is transparent.

6. The laminated glass according to any one of claims 1 to 5, **characterised in that** film A comprises 0 - 20 ppm alkaline and/or alkaline earth ions.

7. The laminated glass according to any one of claims 1 to 6, **characterised in that** the amount of plasticiser WA in film A is equal to or less than 5 % by weight based on the total weight of film A.

8. The laminated glass according to any one of claims 1 to 7, **characterized in that** the amount of plasticiser WB in film B is equal to or higher than 25 % by weight and equal to or less than 35 % by weight based on the total weight of film B.

9. The laminated glass according to any one of claims 1 to 8, **characterised in that** film A comprises a polyvinyl acetal PA with a proportion of vinyl alcohol groups from 6 to 30 % by weight.

10. The laminated glass according to any one of claims 1 to 9, **characterised in that** film B comprises a polyvinyl acetal B with a proportion of vinyl alcohol groups from 14 to 26 % by weight.

11. The laminated glass according to any one of claims 1 to 10, **characterised in that** film A has a thickness of equal to or less than 100 µm and equal to or more than 5 µm.

12. A method for producing a laminated glass according to one of Claims 1 to 11, **characterised in that** the film B is positioned on a first glass sheet, then covered by at least one film A, which has been provided with a coloured region on at least one surface, then positioned on a first glass sheet and covered by a second glass sheet and then laminated at temperatures over 100°C.

13. The method for producing a laminated glass according to claim 12, **characterised in that** the coloured region is provided by coating a suspension of pigments or dyes selected from the group consisting of phthalocyanines, perylenes, anthraquinones, anthrapyrimidines, quinophthalone, perinones, or monoazo dyes, for example Thermoplastrot 454, Macrolexgelb G, Sandoplast Rot G or Solvaperm Rot G, and/or inorganic pigments (for example zinc chromate, cadmiumsulphidein a carrier liquid on the surface of film A.

14. A laminated glass obtained by laminating at least one film A containing a polyvinyl acetal PA and optionally at least one plasticiser WA and at least one film B containing a polyvinyl acetal PB and at least one plasticiser WB between two glass sheets, **characterised in that**
- the laminated glass comprises a coloured region sandwiched between film A and film B wherein film A and film B independently have a thickness of equal to or more than 10 µm and equal to or less than 2000 µm.
